# FASCICULE DE BREVET EUROPEEN

(11) **EP 2 587 588 B1**
(45) Date de publication et mention de la délivrance du brevet: **16.03.2022**
(21) Numéro de dépôt: 12189845.6
(22) Date de dépôt: 24.10.2012
(51) Int. Cl.: H01Q 3/26, G01S 19/23

(54) **PROCEDE DE CALIBRAGE D'UNE ANTENNE ACTIVE**
EINSTELLVERFAHREN EINER AKTIVEN ANTENNE
METHOD FOR CALIBRATING AN ACTIVE ANTENNA

(30) Priorité: 26.10.2011 FR 1103282
(43) Date de publication de la demande: 01.05.2013
(73) Titulaire: THALES, 92400 Courbevoie (FR); Centre National d'Etudes Spatiales, 75039 Paris Cedex 01 (FR)
(72) Inventeur: Calmettes, Thibauld, 31400 Toulouse (FR); Ries, Lionel, 81290 Viviers les Montagnes (FR); Monnerat, Michel, 31240 Saint Jean (FR)
(74) Mandataire: Marks & Clerk France

(56) Documents cités:
- GB-A- 2 418 536
- JOSE I ALONSO ET AL: "Low Cost Electronically Steered Antenna and Receiver System for Mobile Satellite Communications", IEEE TRANSACTIONS ON MICROWAVE THEORY AND TECHNIQUES, IEEE SERVICE CENTER, PISCATAWAY, NJ, US, vol. 44, no. 12, 1 décembre 1996 (1996-12-01), XP011036618, ISSN: 0018-9480
- "COSPAS-SARSAT 406 MHZ MEOSAR IMPLEMENTATION PLAN, R.012, Issue 1, Revision 6", , 1 octobre 2010 (2010-10-01), XP055028106, Extrait de l'Internet: URL:http://www.cospas-sarsat.org/images/st ories/SystemDocs/Archives/R_Series/r12_oct 28.10_completedoc.pdf [extrait le 2012-05-24]

## Description

La présente invention concerne le domaine des antennes actives à commande de phase. Elle concerne plus particulièrement un procédé de calibrage du centre de phase d'une antenne active à commande de phase. L'invention trouve par exemple son utilité dans les antennes actives terrestres de réception pour les communications par satellite.

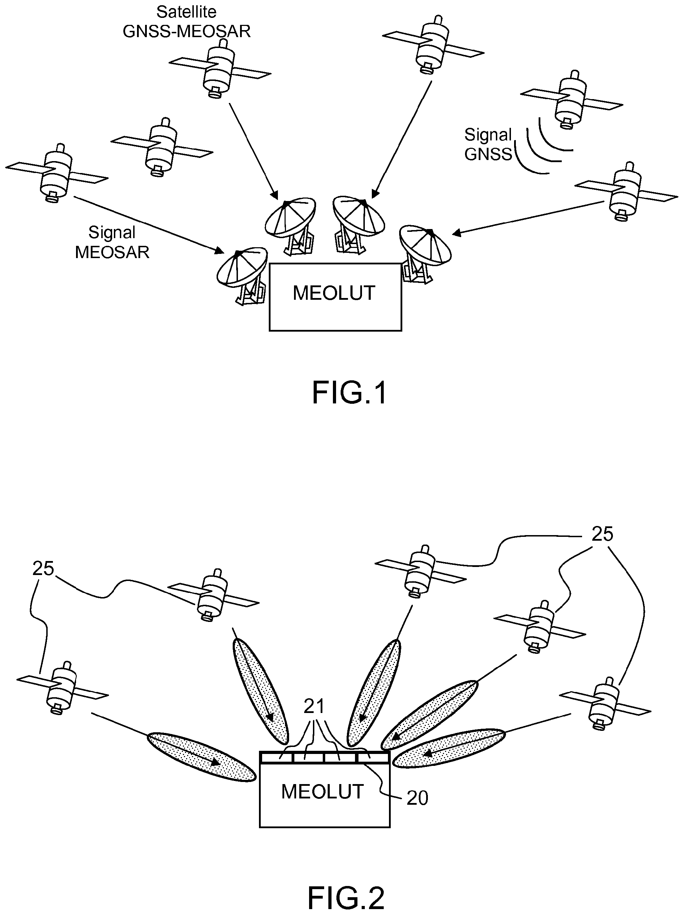

Actuellement, les stations de réception terrestres utilisent généralement pour suivre les satellites un réseau d'antennes paraboliques mobiles. Un exemple d'une telle station de réception est représenté par la figure 1.

Un problème avec ce type d'antennes est qu'elles sont complexes à mettre en œuvre. Elles souffrent également de difficultés de vitesse de changement de pointage, qui peuvent amener des dégradations de performance. De plus, dans les stations de réception, le nombre d'antenne est très limité par le coût. Par ailleurs l'augmentation de gain sur l'antenne s'accompagne d'une augmentation de la dimension de la taille de l'antenne, et par suite une augmentation de la complexité et du coût.

Il est connu d'utiliser une antenne active à commande de phase pour remplacer une ou plusieurs antennes mobiles. Une antenne à commande de phase active est composée d'une pluralité de sous éléments rayonnants ayant chacun un circuit de déphasage. Dans une telle antenne, l'onde émise ou reçue par chacun des sous éléments entre en interférence avec celle des autres et un faisceau est produit par la somme de ces interférences constructives. De plus, en faisant varier les phases et les amplitudes entre chacun des sous éléments, le faisceau peut être orienté vers une direction spécifique.

Une des difficultés liées à l'utilisation d'une antenne active, par exemple pour le suivi et la communication avec les satellites, est la maitrise du gain de ses sous éléments et en particulier dans la bande de fréquence dans laquelle ils sont utilisée.

Si par exemple, dans une direction particulière, un déphasage se crée ou un gain est déformé, la loi de phase qui va être optimale pour pointer dans cette direction particulière ne va pas être la même que s'il n'y avait pas eu de déformation. Il est à noter que cette déformation peut être variable dans le temps.

Il est connu que les éléments perturbateurs qui peuvent entrainer des variations de phase sont des éléments de l'ordre de la longueur d'onde. De ce fait, lorsque la bande de fréquence est basse, par exemple une longueur d'onde de l'ordre d'une vingtaine de centimètres, une multitude d'éléments peuvent perturber le fonctionnement de l'antenne. De plus, l'antenne est également sujette aux effets de scintillation ionosphérique par exemple.

Pour utiliser une antenne active de manière précise il faut donc effectuer un calibrage de l'antenne c'est-à-dire faire en sorte que la loi de phase et d'amplitude entre les différents sous éléments soit vraiment optimale pour la formation de faisceau de façon à garantir un gain optimum de l'antenne. Ce calibrage peut être effectué de façon définitive par exemple en usine mais la précision de formation de faisceau ne sera pas optimale. Ce calibrage peut également être effectué de façon permanente mais cette opération est assez onéreuse.

L'utilisation d'une antenne active unique pour remplacer plusieurs antennes mobiles souffre donc généralement des difficultés de calibrage qui conduisent soit à une dégradation significative du gain s'il est mal fait, soit à la mise en place de systèmes de calibrage complexes et couteux pour obtenir un gain optimum. L'utilisation des antennes actives pour le suivi de constellations à des longueurs d'onde supérieures à 30cm est donc aujourd'hui limitée.

Le calibrage d'une antenne réseau en utilisant des signaux de type GNSS est connu par le document GB 2 418 536 A. Le calibrage général des antennes MEOSAR/MEOLUT est également connu, voir par exemple *"*COSPAS-SARSAT 406 MHZ MEOSAR IMPLEMENTATION PLAN, R.012, Issue 1, Revision 6" : XP055028106.

Un but de l'invention est notamment de pallier les inconvénients précités en proposant un procédé de calibrage permettant d'améliorer les performances de liaison entre au moins un satellite et une antenne active de réception terrestre à commande de phase.

A cet effet, l'invention a pour objet un procédé de calibrage du centre de phase d'une antenne active comprenant une pluralité de sous éléments apte à recevoir un signal utile émis par un satellite, un signal de référence étant émis par le même satellite que le signal utile en plus du signal utile sur une bande de fréquence sensiblement égale à la bande de fréquence du signal utile, et les caractéristiques théoriques de réception du signal de référence étant connues, le signal de référence étant un signal GNSS et le signal utile étant un signal MEOSAR, caractérisé en ce que ledit calibrage est défini en fonction des caractéristiques de réception du signal de référence au niveau de chaque sous élément, le procédé comprenant les étapes suivantes :
- une étape d'acquisition des valeurs du signal de référence et de celles du signal utile au niveau de chacun des sous-éléments de l'antenne de réception,
- une étape de mesure d'écarts éventuels de phase et de gain entre les valeurs du signal de référence réellement reçu et les valeurs théoriques de réception du signal de référence,
- une étape d'évaluation d'une loi de répartition optimale à appliquer au signal de référence pour tenir compte des éventuels écarts,
- une étape d'application de la loi de répartition au signal utile reçu au niveau de chaque sous-élément.

Selon un mode de réalisation, l'étape de mesure du procédé est réalisée par une méthode de corrélation.

Selon une particularité de cette variante les valeurs du signal de référence sont modifiées en faisant varier ces valeurs en temps et/ou en fréquence et/ou en puissance de façon à trouver la forme du signal qui a la meilleure corrélation avec le signal de référence effectivement reçu.

Avantageusement, les différentes étapes du procédé sont réalisées de façon séquentielle en temps réel.

Selon une autre variante, le procédé comprend une étape de mémorisation pendant un intervalle de temps prédéfini des valeurs du signal de référence et de celles du signal utile mesurées au niveau de chacun des sous-éléments de l'antenne de réception afin de d'effectuer les différentes étapes du procédé de façon différée.

D'autres particularités et avantages de la présente invention apparaîtront plus clairement à la lecture de la description ci-après, donnée à titre illustratif et non limitatif, et faite en référence aux dessins annexés, dans lesquels :
- La figure 1 représente un exemple de réalisation d'une station de réception terrestre utilisant des antennes mobiles,
- La figure 2 représente un exemple de réalisation d'une station de réception terrestre utilisant une antenne active unique,
- La figure 3 représente un exemple de mise en œuvre du procédé de calibrage suivant l'invention,
- La figure 4 représente un exemple de réalisation d'une antenne de réception suivant l'invention.

La présente invention à pour objet un procédé de calibrage du centre de phase d'une antenne active de réception terrestre comprenant une pluralité de sous éléments rayonnants et apte à communiquer avec au moins un satellite.

On suppose que le ou les satellites pointés par l'antenne de réception émettent, en plus du signal utile, un signal servant de référence dans une bande de fréquence sensiblement égale à celle du signal utile et dont les caractéristiques de réception sont connues. Le principe de l'invention consiste à utiliser ce signal de référence pour effectuer automatiquement et de manière permanente le calibrage du centre de phase de l'antenne active de réception terrestre.

L'invention va être présentée à travers le calibrage du centre de phase d'une antenne de réception active à commande de phase d'une station terrestre de réception du système MEOSAR (Medium Earth Orbit Search And Rescue ou système satellitaire à orbite moyenne pour la recherche et le sauvetage), pour lequel le signal utile descendant est émis par des satellites de localisation (GPS, Galileo, Glonass) et à une fréquence très proche des signaux de localisation.

La figure 2 représente un centre de traitement au sol (ou MEOLUT pour Medium Earth Orbit Local User Terminal) du système MEOSAR dans lequel les quatre antennes mobiles de réception de la figure 1 ont été remplacées par une antenne de réception 20 active à commande de phase unique. De façon avantageuse cette antenne unique permet, comme décrit précédemment, de pointer simultanément en direction de plusieurs satellites 25 et ainsi réduire le coût des stations MEOLUT.

Le système MEOSAR repose sur différentes constellations de satellites 25 de positionnement (ou GNSS pour Global Navigation Satellite System), comme le GPS (Global Positionning System) américain, le Glonass russe et le système européen Galileo, pour les opérations de recherche et de sauvetage (ou SAR pour « Search And Rescue »). Ces satellites 25 de positionnement ont, en plus de leur fonction principale de localisation, également une fonction SAR et embarquent pour cela un transpondeur servant à relayer les signaux émis par les balises de détresse au sol. La fréquence descendante (ou downlink) de ce transpondeur est dans la bande de fréquence 1544 MHz ~ 1545 MHz.

Une des fréquences de fonctionnement des satellites de positionnement ou GNSS est de 1576 MHz donc une fréquence très proche de la fréquence descendante du système MEOSAR.

L'idée de l'invention repose sur le fait que les caractéristiques de réception des signaux GNSS émis par les satellites 25 de positionnement sont connues.

En effet, la position exacte des satellites GNSS, la position de l'antenne de réception et les instants auxquels sont émis les signaux par les satellites 25 sont connus avec précision grâce précisément aux principes de la localisation GNSS. De ce fait, les caractéristiques théoriques de réception, au niveau des antennes du MEOLUT, sont également connues. De plus, les signaux MEOSAR et GNSS sont émis dans des bandes de fréquences sensiblement égales et sont reçus depuis les mêmes directions. Ces deux signaux vont donc subir les mêmes perturbations au cours de leur propagation entre le satellite 25 de positionnement et l'antenne de réception 20. Ainsi, en comparant les caractéristiques des signaux GNSS effectivement reçus par chaque sous élément 21 de l'antenne active 20 de réception avec les caractéristiques des signaux théoriques qu'elles sont censées recevoir il est possible de calculer les corrections à effectuer pour prendre en compte ces perturbations. || est donc possible de définir une loi d'amplitude et de phase, ou loi de répartition, optimale à appliquer sur chaque sortie des sous antennes 21 du réseau de façon à maximiser la qualité de réception du signal MEOSAR.

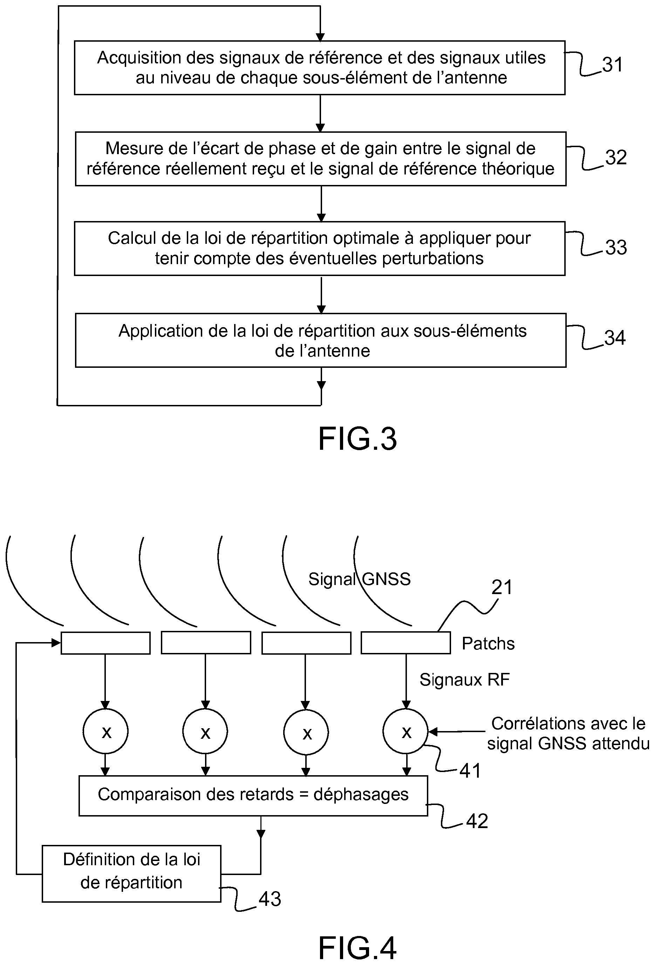

En référence à la figure 3, un mode de mise en œuvre du procédé de calibrage suivant l'invention est présenté.

Dans un premier mode de mise en œuvre du procédé, le calibrage est effectué de façon séquentielle en temps réel.

Suivant une première étape 31 d'acquisition, les valeurs du signal GNSS de référence et les signaux utiles, à savoir les signaux MEOSAR, sont mesurées au niveau de chaque sous éléments 21 de l'antenne de réception 20.

Les valeurs du signal GNSS sont ensuite comparées aux valeurs théoriques de réceptions de ce signal. Les valeurs théoriques de réception du signal GNSS correspondent aux valeurs qu'aurait reçues l'antenne de réception si aucune perturbation n'avait déformé ce signal en gain et/ou en phase. Ces perturbations peuvent être dues à des éléments de longueurs sensiblement égale à la longueur d'onde du signal, à des problèmes liés aux multi trajets, aux effets de scintillation ionosphérique ou à tout autre élément perturbateur.

De façon connue, le signal GNSS attendu est évalué d'après la connaissance de la position de l'antenne de réception 20 et la position des satellites 25 GNSS, par un calcul classique de positionnement GNSS.

Si le signal GNSS effectivement reçu et le signal GNSS théorique attendu sont identiques, aucune perturbation n'a modifié le signal au cours de sa propagation ou aucune nouvelle perturbation n'a modifié la propagation du signal depuis l'application de la précédente loi de répartition. L'antenne ne nécessite donc pas un nouveau calibrage.

Si les deux signaux théorique et effectivement reçu sont différents, un nouveau calibrage doit être effectué de façon à prendre en compte les perturbations. A cet effet, l'erreur entre le signal de référence GNSS effectivement reçu et le signal GNSS théorique est calculé au cours d'une étape 32 pour chacun des sous éléments de l'antenne active de réception.

Suivant un mode de mise en œuvre particulier, cette étape 32 de mesure de l'erreur entre le signal effectivement reçu par chaque sous élément 21 et le signal théorique attendu est réalisée par une méthode de corrélation.

Dans certains modes de mise en œuvre du procédé, la valeur du signal GNSS de référence est modifiée en faisant varier la valeur du signal en temps et/ou en fréquence et/ou en puissance de façon à trouver la forme du signal qui a la meilleure corrélation avec le signal GNSS effectivement reçu et donc la forme du signal qui est la plus proche du signal effectivement reçu.

Une fois le décalage optimal en temps, fréquence et/ou puissance trouvé, la correction à apporter aux valeurs reçues est connue. Une loi de répartition optimale à appliquer aux valeurs des signaux reçus au niveau de chaque sous élément pour tenir compte des perturbations peut donc être évaluée au cours d'une étape 33. La loi de répartition devient celle à appliquer pour maximiser le gain dans la direction souhaitée. Cette même loi de répartition optimale est ensuite appliquée, au cours d'une étape 34, aux sous éléments 21 de l'antenne 20 de réception. L'application de cette loi de répartition équivaut à l'application d'un faisceau de gain dans une direction qui maximise la capacité de réception du signal. Cette direction est généralement proche de la direction « géométrique » entre l'antenne 20 de réception et le satellite 25 pointé mais peut éventuellement être distincte selon les éléments d'environnement comme par exemple les couplages entre sous éléments 21 de l'antenne 20.

|| est possible de vérifier a posteriori que la loi de phase sélectionnée correspond bien celle qui maximise la corrélation avec le signal attendu en appliquant cette loi de répartition aux sous éléments 21 de l'antenne 20 de réception, en relevant les signaux GNSS et en les comparant aux signaux théoriques. Eventuellement, en cas de différences entre les deux signaux la loi de répartition peut être ajustée par de petites variations de phase et amplitude.

|| est à noter que le temps de calcul de la loi de répartition est de l'ordre de la seconde donc faible par rapport au temps de variation des perturbations. En effet, ces perturbations essentiellement d'ordre atmosphérique ou dues à des problèmes de multi trajet de l'onde émise ont des variations de l'ordre de la dizaine de secondes donc des variations beaucoup plus lentes que la seconde du temps de calcul. De ce fait, la loi de répartition appliquée avec environ une seconde de retard sera quasiment optimale, elle n'aura pas suffisamment évoluée au cours de ce délai pour poser problème.

Suivant un autre exemple de mise en œuvre du procédé, le traitement des données n'est pas effectué en temps réel mais est effectué a postériori. Par exemple, les valeurs des signaux GNSS et MEOSAR reçus au niveau de chaque sous élément 21 de l'antenne 20 peuvent être mémorisées dans une zone mémoire de l'antenne et/ou du terminal de traitement des données pendant une période déterminée d'acquisition. Dans un deuxième temps, les valeurs du signal GNSS reçues au niveau de chaque sous antenne et mémorisées sont comparées aux valeurs théoriques de réception afin de définir les différences entre ces deux valeurs et calculer la loi de répartition représentant le mieux les déformations en gain et en phase subies par le signal émis par le satellite pendant la période d'acquisition. Comme décrit précédemment, l'étape de mesure des différences entre le signal effectivement reçu et le signal théorique attendu peut être effectuée par une méthode de corrélation. La loi de répartition calculée est en suite appliquée au signal MEOSAR reçu au niveau de chaque sous élément 21 pendant cette même période d'acquisition.

La figure 4 illustre un exemple de réalisation nullement limitatif d'une antenne de réception 20 autocalibrée selon l'invention. Dans l'exemple représenté, l'antenne de réception 20 est une antenne planaire (ou patch en anglais) possédant quatre sous éléments 21. Chaque sous élément 21 ou module d'émission réception, est relié à un corrélateur 41 de façon à faire la corrélation avec le signal de référence GNSS théorique attendu. Les signaux issus des corrélateurs 41 sont ensuite analysés par un module de comparaison 42. Dans ce module, chaque retard ou avance temporel est traduit par un déphasage sur la loi de répartition. De même, chaque différence d'amplitude est mesurée de façon à définir la compensation à appliquer. Suite à ces calculs, une loi de répartition optimale permettant de traduire au mieux ces différences est calculée dans un module 43 de définition de loi de répartition. Cette loi de répartition est ensuite appliquée aux différents sous éléments 21 de l'antenne 20 pour la réception des signaux utiles, à savoir les signaux MEOSAR pour notre exemple.

L'invention à été décrite à travers un exemple d'utilisation du procédé de calibrage selon l'invention, cependant l'invention ne se limite pas à cet exemple. L'invention est définie par les revendications.

## Revendications

1. Procédé de calibrage du centre de phase d'une antenne (20) active comprenant une pluralité de sous éléments (21) apte à recevoir un signal utile émis par un satellite (25), un signal de référence étant émis par le même satellite (25) que le signal utile en plus du signal utile sur une bande de fréquence sensiblement égale à la bande de fréquence du signal utile, et les caractéristiques théoriques de réception du signal de référence étant connues, le signal de référence étant un signal GNSS et le signal utile étant un signal MEOSAR, **caractérisé en ce que** ledit calibrage est défini en fonction des caractéristiques de réception du signal de référence au niveau de chaque sous élément (21), le procédé comprenant les étapes suivantes :
- une étape (31) d'acquisition des valeurs du signal de référence et de celles du signal utile au niveau de chacun des sous-éléments (21) de l'antenne (20) de réception,
- une étape (32) de mesure d'écarts éventuels de phase et de gain entre les valeurs du signal de référence réellement reçu et les valeurs théoriques de réception du signal de référence,
- une étape (33) d'évaluation d'une loi de répartition optimale à appliquer au signal de référence pour tenir compte des éventuels écarts,
- une étape d'application de la loi de répartition au signal utile reçu au niveau de chaque sous-élément.

2. Procédé selon la revendication précédente, **caractérisé en ce que** l'étape (32) de mesure est réalisée par une méthode de corrélation.

3. Procédé selon la revendication précédente, **caractérisé en ce que** les valeurs du signal de référence sont modifiées en faisant varier ces valeurs en temps et/ou en fréquence et/ou en puissance de façon à trouver la forme du signal qui a la meilleure corrélation avec le signal de référence effectivement reçu.

4. Procédé selon une des revendications 2 à 3, **caractérisé en ce que** les différentes étapes (31, 32, 33, 34) du procédé sont réalisées de façon séquentielle en temps réel.

5. Procédé selon une des revendications 2 à 3, **caractérisé en ce qu'**il comprend une étape de mémorisation pendant un intervalle de temps prédéfini des valeurs du signal de référence et de celles du signal utile mesurées au niveau de chacun des sous-éléments (21) de l'antenne (20) de réception afin de d'effectuer les étapes (32, 33, 34) du procédé de façon différée.

## Patentansprüche

1. Kalibrierungsverfahren des Phasenzentrums einer aktiven Antenne (20), welche eine Vielzahl von Subelementen (21) umfasst, die in der Lage sind ein von einem Satelliten (25) gesendetes Nutzsignal zu empfangen, wobei ein Referenzsignal von dem selben Satelliten (25) wie das Nutzsignal, zusätzlich zu dem Nutzsignal auf einem Frequenzband gesendet wird, das im Wesentlichen dem Frequenzband des Nutzsignals entspricht, und wobei die theoretischen Empfangseigenschaften des Referenzsignals bekannt sind, wobei das Referenzsignal ein GNSS-Signal und das Nutzsignal ein MEOSAR-Signal ist, **dadurch gekennzeichnet, dass** das Kalibirieren entsprechend den Empfangseigenschaften des Referenzsignals an jedem Subelement (21) definiert wird, wobei das Verfahren die folgenden Schritte umfasst:
- einen Schritt (31) des Erlangens der Werte des Referenzsignals und von denen des Nutzsignals an jedem der Subelemente (21) der Empfangsantenne (20);
- einen Schritt (32) des Messens von möglichen Phasen- und Verstärkungsabweichungen zwischen den Werten des tatsächlich empfangenen Referenzsignals und den theoretischen Werten des Empfangs des Referenzsignals;
- einen Schritt (33) des Bewertens eines an das Referenzsignal anzuwendenden optimalen Verteilungsgesetzes zur Berücksichtigung möglicher Abweichungen;
- einen Schritt des Anwendens des Verteilungsgesetzes an das empfangene Nutzsignal an jedem Subelement.

2. Verfahren nach dem vorhergehenden Anspruch, **dadurch gekennzeichnet, dass** der Schritt (32) des Messens durch ein Korrelationsverfahren durchgeführt wird.

3. Verfahren nach dem vorhergehenden Anspruch, **dadurch gekennzeichnet, dass** die Werte des Referenzsignals durch Variation dieser Werte in der Zeit und/oder in der Frequenz und/oder in der Leistung modifiziert werden, um die Form des Signals zu finden, die die beste Korrelation mit dem tatsächlich empfangenen Referenzsignal aufweist.

4. Verfahren nach einem der Ansprüche 2 bis 3, **dadurch gekennzeichnet, dass** die verschiedenen Schritte (31, 32, 33, 34) des Verfahrens sequentiell in Echtzeit ausgeführt werden.

5. Verfahren nach einem der Ansprüche 2 bis 3, **dadurch gekennzeichnet, dass** es einen Schritt des Speicherns der Werte des Referenzsignals und derjenigen des Nutzsignals, die an jedem der Subelemente (21) der Empfangsantenne (20) gemessen werden, während eines vorbestimmten Zeitintervalls umfasst, um die Schritte (32, 33, 34) des Verfahrens zeitversetzt durchzuführen.

## Claims

1. Method for calibrating the phase center of an active antenna (20) comprising a plurality of sub-elements (21) capable of receiving a useful signal transmitted by a satellite (25), a reference signal being emitted by the same satellite (25) as the useful signal in addition to the useful signal over a frequency band substantially equal to the frequency band of the useful signal, and the theoretical reception characteristics of the reference signal being known, the reference signal being a GNSS signal and the useful signal being a MEOSAR signal, **characterized in that** said calibration is defined as a function of the reception characteristics of the reference signal at the level of each sub-element (21), the method comprising the following steps:
- a step (31) of acquiring the values of the reference signal and those of the useful signal at the level of each of the sub-elements (21) of the receiving antenna (20),
- a step (32) of measuring possible phase and gain differences between the values of the reference signal actually received and the theoretical values of reception of the reference signal,
- a step (33) of evaluating an optimal distribution law to be applied to the reference signal to take account of possible deviations,
- a step of applying the distribution law to the useful signal received at the level of each sub-element.

2. Method according to the preceding claim, **characterized in that** the measurement step (32) is performed by a correlation method.

3. Method according to the preceding claim, **characterized in that** the values of the reference signal are modified by varying these values in time and/or in frequency and/or in power in order to find the shape of the signal which has the best correlation with the reference signal actually received.

4. Method according to one of claims 2 to 3, **characterized in that** the different steps (31, 32, 33, 34) of the method are performed sequentially in real time.

5. Method according to one of claims 2 to 3, **characterized in that** it comprises a step of storing during a predefined time interval the values of the reference signal and of those of the useful signal measured at the level of each of the sub-elements (21) of the receiving antenna (20) so as to perform the steps (32, 33, 34) of the method in a deferred manner.
